Europäisches Patentamt

European Patent Office

Office européen des brevets

(11) Publication number: **0 042 138**
A2

# EUROPEAN PATENT APPLICATION

(21) Application number: **81104479.1**

(22) Date of filing: **11.06.81**

(51) Int. Cl.³: **A 43 B 17/14**

(30) Priority: **17.06.80 GB 8019666**

(43) Date of publication of application: **23.12.81**
**Bulletin 81/51**

(84) Designated Contracting States: **AT BE CH DE FR GB IT LI LU NL SE**

(71) Applicant: **SCHERING-PLOUGH CORPORATION, 2000 Galloping Hill Road, kenilworth New Jersey 07033 (US)**

(72) Inventor: **Hayward, Royston Norman, 12 Victoria Rd., Fleet Hampshire (GB)**

(74) Representative: **Antony, Fritz, Dr. et al, P.O. Box 601 Winkelriedstrasse 35, CH-6002 Lucerne (CH)**

(54) **Simplified cold insulating insole.**

(57) A cold-insulating insole for use in articles of footwear comprises a layer of fabric forming the top surface of the insole and, laminated thereto, a laminate of a layer of closed-cellular elastomeric material and a layer of metallised polymeric material.

EP 0 042 138 A2

- 1 -

## Simplified cold insulating insole

This invention relates to insoles for use in articles of footwear.

Insoles of many varied constructions have been on the market for many years. Some have been simple constructions of a single layer, and others have had a multi-layer construction. A wide variety of materials, including cork, fleece, felt, leather, and natural or synthetic rubber have been used. In many insoles a top fabric layer of thin woven material such as nylon is present, to help the wearer slide his foot into the footwear when putting it on. Some known insoles include anti-slip coatings to prevent the insoles from sliding in the shoes, especially when the wearer puts these on, or to prevent their wrinkling or puckering up in the footwear in use.

Insoles designed to insulate against cold have been made of materials such as fleece or felt combined with a layer of rubber latex foam; consequently they are generally so thick when adequate cold insulation is provided that the wearer has to have a larger size of footwear to accommodate the insole and yet provide comfort in walking. Multi-layer insoles are usually designed to be thinner than single layer insoles in order to avoid this disadvantage; but then they may suffer from further disadvantages such as inadequate cold-insulation or lack of rigidity causing them to pucker up under the foot in wear. Moreover, the more layers that are present, the more difficult it is to manufacture the insole and, in particular, the greater the thickness variations that occur.

It is therefore an object of the present invention to provide a simple cold-insulating insole consisting essentially of three layers, providing improved insulation against cold and also against moisture, and being simple to manufacture, and having improved rigidity so that it shows a low tendency to buckle or pucher up in use.

The insole described in British patent specification 1,539,631 has four layers, a fabric layer forming the top layer, a layer of aluminium-coated polymeric material forming another layer (usually the bottom layer), and two further layers, one an open-cell polyurethane and the other a closed-cell polyolefin layer. In that insole, the polyurethane foam provides a cushioning effect and the polyolefin foam provides a cold-insulating effect. However, to keep the thickness of the insole within reasonable limits, both these layers must be thin, so that the cushioning and cold-insulating effects achievable therewith are limited. The present invention replaces these two layers by a single layer providing good cushioning and good cold insulation, and thus provides an article that is simpler to manufacture but is superior in performance.

According therefore to the present invention, an insole for use in articles of footwear comprises a layer of fabric forming the top surface of the insole and, laminated thereto, a laminate of a layer of closed-cellular elastomeric material and a layer of metallised polymeric material.

Whereas the metallised polymeric material may be situated between the cellular elastomeric material and the preferably thin layer of fabric forming the top surface of the insole, it is much preferred to have the metallised polymeric material laminated to the bottom surface of the elastomeric material. It is especially preferred to use an aluminium--coated or aluminised polymeric material as the metallised polymeric material, owing to relative cheapness and convenience in handling aluminium. This metallised layer is preferably thin, e.g. of paper-thinness, but forms an effective moisture barrier, serving to keep from the wearer's foot moisture that may penetrate through the sole of the footwear. If desired, its free under-surface may be embossed, grooved or otherwise roughened to enhance its grip on the insole of the footwear and thereby to minimise the risk of its wrinkling in the shoe in wear. If desired it may incorporate strengthening material e.g. glass fibres.

0042138

- 4 -

The fabric layer is of a soft fabric, for example a nylon felt or polyester felt, which is pleasant under the foot and imparts a warm comfortable "feel" to the plantar surface of the wearer's foot. Whereas it enables the wearer to put the footwear on easily and comfortably, it strongly reduces any tendency of the foot to slide or slip on the insole during walking when the insole is under pressure.

The single layer of elastomeric material now combines the cushioning properties of an open cell foam and the thermal insulation properties of previously used closed-cell foams. This elastomeric material may be for example a closed-cell foam of a polyolefin-type material; it may also be a micro-cellular closed-cell diene-type natural or synthetic rubber polymer of similar properties. The former type may be exemplified by co-polymers of ethylene and vinyl acetate or of ethylene and another olefin e.g. propylene or butylene.

The closed-cell elastomeric layer of the insole of the present invention consists of cross-linked closed-cell cellular materials preferably based on natural or synthetic diene rubbers (e.g. butadiene or isoprene or chloroprene rubbers) or of copolymers of ethylene and vinyl acetate or blends of ethylene and propylene.

- 5 -

The closed-cell elastomeric layer may for example be a polyolefin or a co-polymer of an olefin and a non-hydrocarbon aliphatic monomer copolymerisable therewith. It may also be a blend of such a polyolefin and copolymer.

The olefin preferably has two to four carbon atoms, e.g., ethylene, propylene or butylene; if desired, a mixture of two or more of these monomers may be used in the polymerisation. The non-hydrocarbon monomer may for example be an alkenyl halide e.g. vinyl chloride or allyl chloride, an unsaturated alcohol e.g. allyl alcohol, an amide e.g. acrylamide, or an unsaturated ester e.g. vinyl acetate, ethyl acrylate or allyl methacrylate. Preferably the non-hydrocarbon monomer is an unsaturated ester, in particular an alkenyl alkanoate in which both the alkenyl and the alkanoate moieties contain up to four carbon atoms. Thus the alkenyl moiety may for example be allyl, methallyl or preferably vinyl, and the alkanoate moiety is preferably that of acetic, propionic or butyric acid. A particularly preferred unsaturated ester is vinyl acetate.

If desired, the copolymer may contain more than two monomers. Such a copolymer may have been derived from two or more olefins or two or more non-hydrocarbon monomers. Thus it may for example have been derived from a mixture of ethylene and propylene copolymerised with vinyl acetate, or from ethylene copolymerised with a mixture of ethyl acrylate and methyl methacrylate. Copolymers containg vinyl alcohol units can be prepared by partial hydrolysis of a copolymer of vinyl acetate with an olefin, especially ethylene. The copolymer may advantageously contain 2 to 17% by weight, preferably 3 to 15%, of the non-hydrocarbon monomer units.

These resins are chemically expanded or foamed to give a foam with a percentage of closed cells in excess of 90%.

In a suitable construction, the layer of elastomeric material is preferably 0.08 to 0.18 inch thick (2 to 4.5 mm. thick) with a density of 20-120, preferably 30-100 kg./m.$^3$, the insole having a total thickness of about 0.1 to 0.22 inch (2.5 to 5.5 mm.) The layer of elastomeric material is preferably 0.12 to 0.16 inch thick (3 to 4 mm.), and the total thickness of the insole is preferably 0.14 to 0.2 inch (3.5 to 5.0 mm.). The insole can be made in conventional manner, the three layers being fed from roller-stores through nip rollers in order to form the laminate. If the lamination is effected by heating, the nip rollers may be heated, or alternatively flame lamination or flame bonding may be used. Alternatively, the layers may be glued together over their total contacting surfaces. The method chosen will be such as to avoid danger of delamination in use and wear.

The insoles of the present invention may be cut out of a 3-layer sheet of material, which can be prepared for example by feeding each layer from a supply roll thereof through one or more sets of rollers, in particular including a pair of pressure rollers. The pressure rollers may themselves be heated in order to heat-weld the layers together into a composite ribbon, or heating may be applied to the individual layers immediately before the pressure rollers. If desired, appropriate adhesives may be spread over the layers before they pass through the pressure rollers.

In order that the invention may be more fully understood, a particularly preferred embodiment thereof will now be described with reference to the accompanying drawings, in which:

Figure 1 is a plan view of the underside of an insole;

Figure 2 is a side elevation of the insole of Figure 1 as it will be used in an article of footwear, that is with the fabric layer on the top;

Figure 3 is a part section on the line III-III of Figure 1 looking in the direction of the arrows and drawn to a larger scale; and

Figure 4 is a diagrammatic perspective view illustrating one suitable method for making the insoles of the present invention.

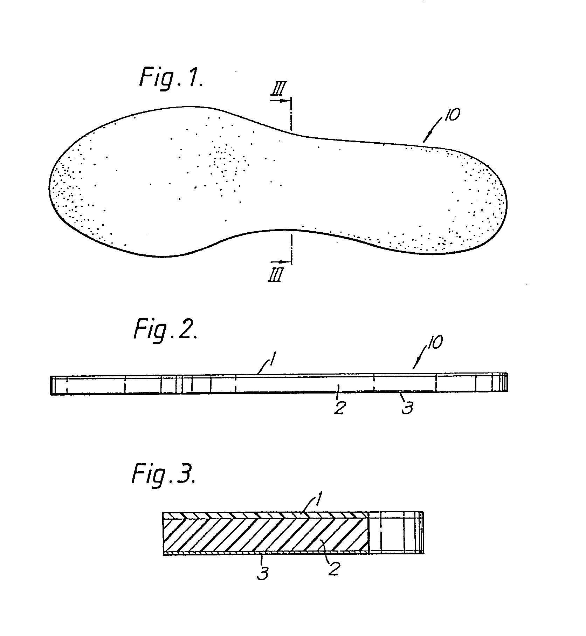

The insole 10 illustrated in Figures 1 to 3 comprises three layers: a top layer 1 of soft fabric such as nylon felt; a central layer 2, the thickest layer, of elastomeric material forming a cushioning and insulating layer; and a bottom layer 3 in the form of a film of aluminised polymeric material such as polyester film (such as that sold under the trademark "MYLAR") and/or polyolefin film (such as that sold under the trademark "ASTRALON").

All the layers may be laminated by application of heat or flame or adhesive coating. Alternatively, they may be made to adhere by coating in situ so as to product a uniform bond over all contacting surfaces and thus minimise delamination in use and wear. The centre layer 2 is composed of a polymer foam that provides not only good insulation against cold and moisture but also good cushioning comfort in wear. This polymer foam is an elastomeric material and may be for example a cross-linked closed-cell foam of a polyolefin-type material; it may also be a micro-cellular cross-linked closed-cell diene-type natural or synthetic rubber polymer of similar properties. The former type may be exemplified by copolymers of ethylene and vinyl acetate or of ethylene and another olefin e.g. propylene or butylene. A particularly preferred material, providing improved cold and moisture insulation and improved cushioning comfort in wear, is a closed-cell foam consisting of a co-polymer of vinyl acetate and ethylene, in which the vinyl acetate is present in the range of 5-20% by weight. Suitable materials include those sold under the trademarks "ALVEOLIT" and "FRELEN". The use of a relatively high percentage of vinyl acetate in the co-polymer (i.e. 10-20% by weight), yields a softer foam that provides a better cushioning effect for greater comfort.

The top layer 1 provides a warm comfortable feel to the wearer's foot. The middle layer 2 relieves the plantar surface of the wearer's foot, especially when such infirmities as epidermal callosities are present. This layer is dense, having a density of 20 to 120, preferably 30 - 100 kg./m.$^3$ and a thickness of 0.08-0.18 inch (2.0-4.5 mm.).

The bottom layer 3 is a barrier to cold and moisture, so that in use access of external moisture to the wearer's foot is considerably slowed.

- 10 -

The following Table characterises a particularly preferred foam of a copolymer of vinyl acetate and ethylene for the middle layer 2:

TABLE

| | |
|---|---|
| Percent vinyl acetate in copolymer | 10-20% by weight |
| Preferred method of cross linking | Irradiation |
| Preferred method of expansion | Decomposition of organic blowing agent to expand softened polymer. |
| Cellular structure | Predominantly closed cell, i.e.greater than 90%. |
| Density of cellular layer | 20-120 kg./m.$^3$ |
| Hardness at 40% compression | 630-775 g./sq.cm. |

Compression stress/strain properties

At 20% compression: 280-420 g./sq.cm.

At 40% compression: 630-775 g./sq.cm.

At 60% compression: 1190-1400 g./sq.cm.

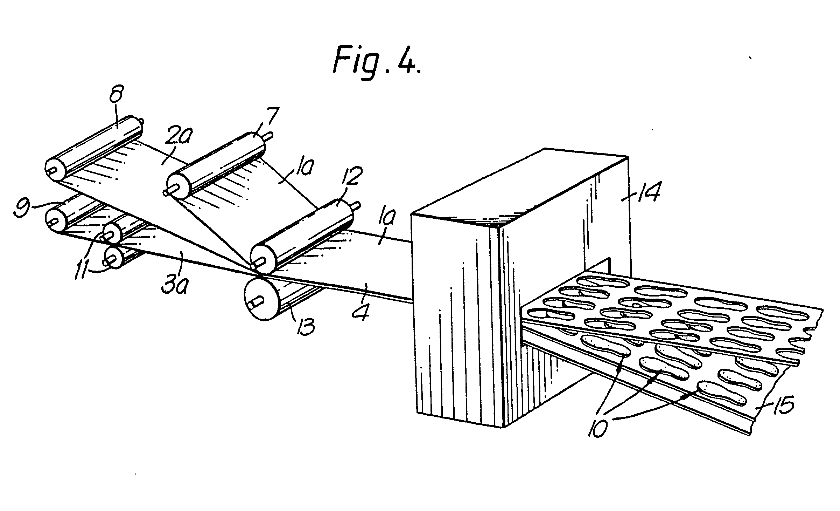

Fig. 4 shows diagrammatically a method for producing the insole 10 of Figs. 1 to 3. The three-layer material of the insole 10 is made in a relatively wide sheet 4. The top layer of material 1a is removed in a known manner from a supply roll 7, and material for the second layer 2a and third layer 3a is removed from supply rolls 8 and 9 respectively. If the material 3a for layer 3 of the insole has not already been embossed before being wound onto the supply roll 9, then, after leaving the roll 9, it will pass between a pair of embossing rolls 11. The three layers 1a, 2a and 3a are then passed between a pair of pressure rolls 12 and 13, at least one of which is heated sufficiently to heat-weld the layers together into a composite three-layer sheet 4. The sheet 4 continues to a conventional die cutting machine diagrammatically shown at 14, such a machine being commercially available. The cutting machine 14 is designed to cut out the insoles 10 from the composite sheet 4 with minimum wastage. The insoles can be removed from the cutting machine 14 on a continuous band 15.

Instead of the heating rollers 12 and 13, other means of lamination may be used, for example flame-bonding or adhesive bonding.

CLAIMS

1.    An insole for use in articles of footwear, comprising a layer of fabric forming the top surface of the insole and, laminated thereto, a laminate of a layer of closed-cellular elastomeric material and a layer of metallized polymeric material.

2.    An insole as claimed in claim 1 wherein the layers of fabric and of metallised polymeric material are laminated to opposite surfaces of the elastomeric material.

3.    An insole as claimed in claim 1 or claim 2 wherein the metallized polymeric material is an aluminised polymeric material.

4.    An insole as claimed in any of claims 1 to 3 wherein the fabric layer is of nylon felt or polyester felt.

5.    An insole as claimed in any of claims 1 to 4 wherein the elastomeric material is a closed-cell foam of a polyolefin-type material or a micro-cellular closed-cell diene-type natural or synthetic rubber polymer.

6.    An insole as claimed in claim 5 wherein the closed-cell elastomeric layer is a polyolefin  or a copolymer of an olefin and a non-hydrocarbon aliphatic monomer copolymerisable therewith, or a blend of such a polyolefin and copolymer.

7.    An insole as claimed in claim 6 wherein the closed-cell elastomeric layer is a copolymer of at least one olefin and vinyl acetate.

8.    An insole as claimed in claim 7 wherein the olefin is ethylene, or ethylene and propylene.

9.    An insole as claimed in claim 7 wherein the closed-cell elastomeric layer is a copolymer of ethylene and vinyl acetate containing 10-20% by weight of vinyl acetate.

10.    An insole as claimed in any of claims 1 to 9 having a total thickness of 2.5 to 5.5 mm., the layer of elastomeric material having a thickness of 2 to 4.5 mm.

Fig.1.

III

III

10

Fig.2.

1

10

2

3

Fig.3.

1

3

2

Fig. 4.